# EUROPEAN PATENT APPLICATION

(11) **EP 2 503 099 A2**
(43) Date of publication of application: **26.09.2012**
(21) Application number: 12159559.9
(22) Date of filing: 15.03.2012
(51) Int. Cl.: F01D 5/18, F01D 5/14

(54) **Components with cooling channels formed in coating and methods of manufacture**

(30) Priority: 21.03.2011 US 201113052415
(71) Applicant: General Electric Company, Schenectady, NY 12345 (US)
(72) Inventor: Bunker, Ronald Scott, Niskayuna, NY New York 12309 (US); Lipkin, Don Mark, Niskayuna, NY New York 12309 (US); Wei, Bin, Niskayuna, NY New York 12309 (US)
(74) Representative: Cleary, Fidelma

(57) **Abstract**

A method of fabricating a component (100) is provided. The method includes depositing a structural coating (54) on an outer surface (112) of a substrate (110), where the substrate (110) has at least one hollow interior space (114). The method further includes forming one or more grooves (132) in the structural coating (54). Each groove has a base (134) and extends at least partially along the substrate. The method further includes depositing at least one additional coating (56, 59) over the structural coating and over the groove(s), such that the groove(s) and the additional coating together define one or more channels (130) for cooling the component. The method further includes forming one or more access holes (140) through the base (134) of a respective groove, to connect the respective groove in fluid communication with the respective hollow interior space (114), and forming at least one exit hole (142) through the additional coating (56, 59) for each channel, to receive and discharge coolant from the respective channel. A component (100) with cooling channels (130) formed in a structural coating (54) is also provided.

## Description

### BACKGROUND

The invention relates generally to gas turbine engines, and, more specifically, to micro-channel cooling therein.

In a gas turbine engine, air is pressurized in a compressor and mixed with fuel in a combustor for generating hot combustion gases. Energy is extracted from the gases in a high pressure turbine (HPT), which powers the compressor, and in a low pressure turbine (LPT), which powers a fan in a turbofan aircraft engine application, or powers an external shaft for marine and industrial applications.

Engine efficiency increases with temperature of combustion gases. However, the combustion gases heat the various components along their flowpath, which in turn requires cooling thereof to achieve a long engine lifetime. Typically, the hot gas path components are cooled by bleeding air from the compressor. This cooling process reduces engine efficiency, as the bled air is not used in the combustion process.

Gas turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined, and suitably cooled.

In all of these exemplary gas turbine engine components, thin metal walls of high strength superalloy metals are typically used for enhanced durability while minimizing the need for cooling thereof. Various cooling circuits and features are tailored for these individual components in their corresponding environments in the engine. For example, a series of internal cooling passages, or serpentines, may be formed in a hot gas path component. A cooling fluid may be provided to the serpentines from a plenum, and the cooling fluid may flow through the passages, cooling the hot gas path component substrate and coatings. However, this cooling strategy typically results in comparatively low heat transfer rates and non-uniform component temperature profiles.

Micro-channel cooling has the potential to significantly reduce cooling requirements by placing the cooling as close as possible to the heated region, thus reducing the temperature difference between the hot side and cold side of the main load bearing substrate material for a given heat transfer rate. A previous manufacturing approach to the formation of cooling micro-channels in turbine airfoils has been to form channels in the exterior skin of the airfoil casting, and then to coat over the channels with a structural coating. See for example, US Patent No. 5,626,462, Melvin R. Jackson et al., "Double-Wall Airfoil," which is incorporated by reference herein in its entirety. However, reduction of wall thickness and the corresponding strength reduction for the cast airfoils remains a concern with these techniques, as the channels are machined into the load bearing substrate.

It would therefore be desirable to provide a method for fabricating a micro-channel cooled component that eliminates any reduction in strength of the cast airfoils. It would further be desirable to provide a method for fabricating a micro-channel cooled component that enhances thermal protection of the load bearing substrate.

### BRIEF DESCRIPTION

One aspect of the present invention resides in a method of fabricating a component. The method includes depositing a structural coating on an outer surface of a substrate. The substrate has at least one hollow interior space. The method further includes forming one or more grooves in the structural coating. Each groove has a base and extends at least partially along the substrate. The method further includes depositing at least one additional coating over the structural coating and over the groove(s), such that the groove(s) and the additional coating together defme one or more channels for cooling the component. The method further includes forming one or more access holes through the base of a respective one of the grooves to connect the respective groove in fluid communication with the respective hollow interior space. The method further includes forming at least one exit hole through the additional coating for each of the respective one or more channels, to receive and discharge coolant from the respective channel.

Another aspect of the present invention resides in a component that includes a substrate comprising an outer surface and an inner surface, where the inner surface defines at least one hollow, interior space. The component further includes a structural coating disposed over at least a portion of the outer surface of the substrate. The structural coating defines one or more grooves. Each groove extends at least partially along the substrate and has a base. One or more access holes extend through the base of a respective one of the one or more grooves to place the groove in fluid communication with the respective hollow interior space. The component further includes at least one additional coating disposed over the structural coating and over the groove(s), such that the groove(s) and the additional coating together defme one or more channels for cooling the component. At least one exit hole extends through the additional coating for each of the respective one or more channels, to receive and discharge a coolant fluid from the respective channel.

### DRAWINGS

Embodiments of the present invention will now be described, by way of example only, with reference to the accompanying drawings in which:
FIG. 1 is a schematic illustration of a gas turbine system;
FIG. 2 is a schematic cross-section of an example airfoil configuration with cooling channels formed in a structural coating, in accordance with aspects of the present invention;
FIGS. 3-8 schematically illustrate process steps for forming channels in a structural coating;
FIG. 9 schematically depicts, in perspective view, three example channels that are formed in the structural coating and channel coolant to respective film cooling holes;
FIG. 10 is a cross-sectional view of one of the example channels of FIG. 9 and shows the micro-channel conveying coolant from an access hole, through the structural coating, to a film cooling hole;
FIGS. 11-18 schematically illustrate alternate process steps for forming channels in a structural coating using a fugitive coating; and
FIGS. 19-20 schematically illustrate alternate process steps for forming re-entrant shaped channels in a structural coating without the use of a sacrificial filler and where the resulting channels have permeable slots.

### DETAILED DESCRIPTION

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the term "combination" is inclusive of blends, mixtures, alloys, reaction products, and the like.

Moreover, in this specification, the suffix "(s)" is usually intended to include both the singular and the plural of the term that it modifies, thereby including one or more of that term (e.g., "the passage hole" may include one or more passage holes, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

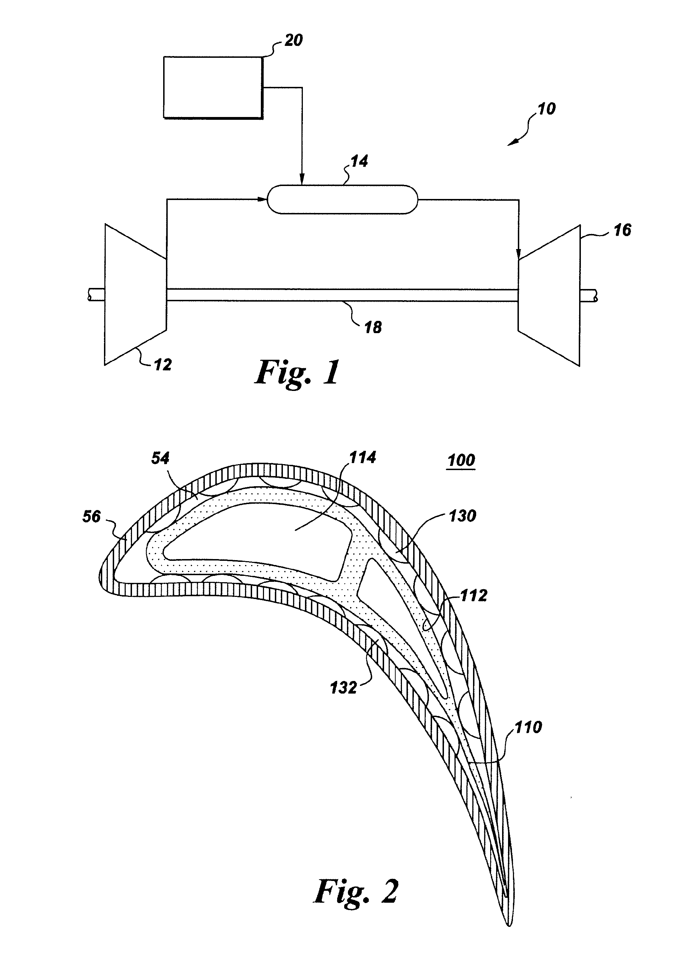

FIG. 1 is a schematic diagram of a gas turbine system 10. The system 10 may include one or more compressors 12, combustors 14, turbines 16, and fuel nozzles 20. The compressor 12 and turbine 16 may be coupled by one or more shaft 18. The shaft 18 may be a single shaft or multiple shaft segments coupled together to form shaft 18.

The gas turbine system 10 may include a number of hot gas path components 100. A hot gas path component is any component of the system 10 that is at least partially exposed to a high temperature flow of gas through the system 10. For example, bucket assemblies (also known as blades or blade assemblies), nozzle assemblies (also known as vanes or vane assemblies), shroud assemblies, transition pieces, retaining rings, and compressor exhaust components are all hot gas path components. However, it should be understood that the hot gas path component 100 of the present invention is not limited to the above examples, but may be any component that is at least partially exposed to a high temperature flow of gas. Further, it should be understood that the hot gas path component 100 of the present disclosure is not limited to components in gas turbine systems 10, but may be any piece of machinery or component thereof that may be exposed to high temperature flows.

When a hot gas path component 100 is exposed to a hot gas flow, the hot gas path component 100 is heated by the hot gas flow and may reach a temperature at which the hot gas path component 100 fails. Thus, in order to allow system 10 to operate with hot gas flow at a high temperature, increasing the efficiency and performance of the system 10, a cooling system for the hot gas path component 100 is required.

In general, the cooling system of the present disclosure includes a series of small channels, or micro-channels, formed in the surface of the hot gas path component 100. For industrial sized power generating turbine components, "small" or "micro" channel dimensions would encompass approximate depths and widths in the range of 0.25 mm to 1.5 mm, while for aviation sized turbine components channel dimensions would encompass approximate depths and widths in the range of 0.15 mm to 0.5 mm. The hot gas path component may be provided with a cover layer. A cooling fluid may be provided to the channels from a plenum, and the cooling fluid may flow through the channels, cooling the cover layer.

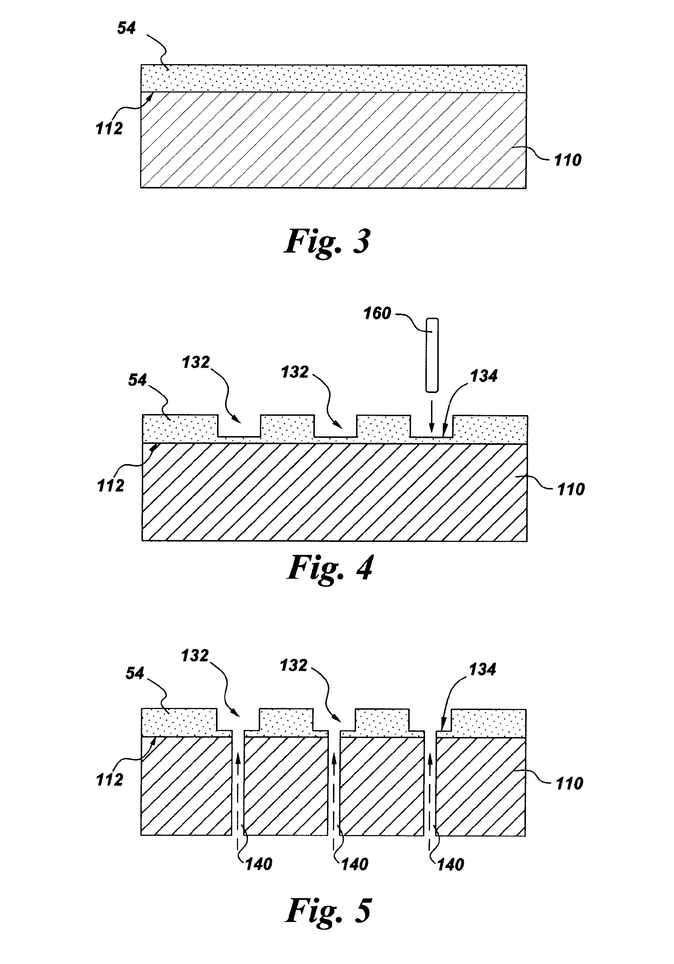

A method of fabricating a component 100 is described with reference to FIGS. 2-20. As indicated, for example, in FIG. 3, the component fabrication method includes, depositing a structural coating 54 on an outer surface 112 of a substrate 110. As indicated, for example, in FIG. 2, the substrate 110 has at least one hollow interior space 114. Example structural coatings are provided in US Patent No. 5,640,767 and US Patent No. 5,626,462, which are incorporated by reference herein in their entirety. As discussed in US Patent No. 5,626,426, the structural coatings are bonded to portions of the surface 112 of the substrate 110. For example configurations, the structural coating 54 has a thickness of less than about 1.0 mm and, more particularly, less than about 0.5 mm. For example, structural coatings 54 formed using an ion plasma deposition may have thicknesses of less than about 0.5 mm, but for a thermal plasma spray (such as high velocity oxygen fuel) coating, the thickness of the structural coating 54 may be less than about 1 mm.

The substrate 110 is typically cast prior to depositing the first layer of the structural coating 54 on the surface 112 of the substrate 110. As discussed in US Patent No. 5,626,462, substrate 110 may be formed from any suitable material. Depending on the intended application for component 100, this could include Ni-base, Co-base and Fe-base superalloys. The Ni-base superalloys may be those containing both γ and Y phases, particularly those Ni-base superalloys containing both γ and γ' phases wherein the γ' phase occupies at least 40% by volume of the superalloy. Such alloys are known to be advantageous because of a combination of desirable properties including high temperature strength and high temperature creep resistance. The substrate material may also comprise a NiAl intermetallic alloy, as these alloys are also known to possess a combination of superior properties including high temperature strength and high temperature creep resistance that are advantageous for use in turbine engine applications used for aircraft. In the case of Nb-base alloys, coated Nb-base alloys having superior oxidation resistance will be preferred, particularly those alloys comprising Nb-(27-40)Ti-(4.5-10.5)Al-(4.5-7.9)Cr-(1.5-5.5)Hf-(0-6)V, where the composition ranges are in atom per cent. The substrate material may also comprise a Nb-base alloy that contains at least one secondary phase, such as a Nb-containing intermetallic compound comprising a silicide, carbide or boride. Such alloys are composites of a ductile phase (i.e., the Nb-base alloy) and a strengthening phase (i.e., a Nb-containing intermetallic compound). For other arrangements, the substrate material comprises a molybdenum based alloy, such as alloys based on molybdenum (solid solution) with Mo₅SiB₂ and Mo₃Si second phases. For other configurations, the substrate material comprises a ceramic matrix composite, such as a silicon carbide (SiC) matrix reinforced with SiC fibers. For other configurations the substrate material comprises a TiAl-based intermetallic compound.

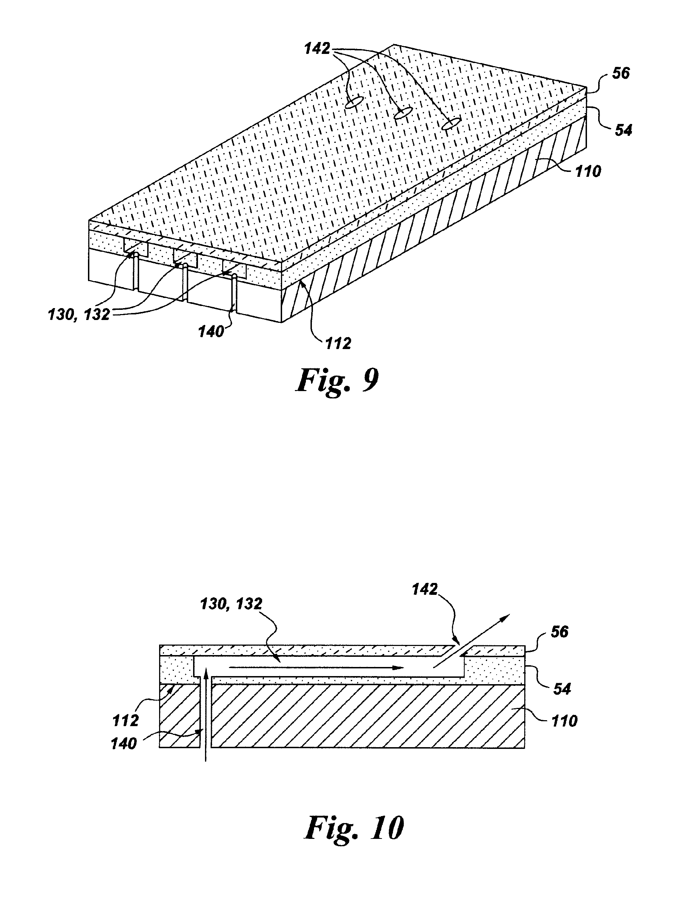

As indicated, for example, in FIG. 4, the component fabrication method further includes forming one or more grooves 132 in the structural coating 54. As indicated in FIG. 4, each of the grooves 132 has a base 134, and, as shown for example in FIGS. 9 and 10, extends at least partially along the substrate 110. It should be noted that although the grooves 132 are shown in FIG. 4 as being formed entirely in the structural coating 54, for certain arrangements the grooves 132 may extend through the structural coating 54 and into the substrate 110. For certain arrangements the grooves 132 may extend only partially through the structural coating 54, such that some coating remains between the groove 132 and the substrate 110. Further, although the grooves are shown as having straight walls, the grooves 132 can have any configuration, for example, they may be straight, curved, or have multiple curves.

The grooves 132 may be formed using a variety of techniques. For example, the grooves 132 may be formed using one or more of an abrasive liquid jet, plunge electrochemical machining (ECM), electric discharge machining with a spinning single point electrode (milling EDM), and laser machining (laser drilling). Example laser machining techniques are described in commonly assigned, US Patent Application Ser. No. 12/697,005, "Process and system for forming shaped air holes" filed January 29, 2010, which is incorporated by reference herein in its entirety. Example EDM techniques are described in commonly assigned US Patent Application Ser. No. 12/790,675, "Articles which include chevron film cooling holes, and related processes," filed May 28, 2010, which is incorporated by reference herein in its entirety.

For particular process configurations, the grooves 132 are formed by directing an abrasive liquid jet 160 at the first layer of the structural coating 54, as schematically depicted in FIG. 4. Example water jet drilling processes and systems are provided in commonly assigned US Patent Application Ser. No. 12/790,675, "Articles which include chevron film cooling holes, and related processes," filed May 28, 2010, which is incorporated by reference herein in its entirety. As explained in US Patent Application Ser. No. 12/790,675, the water jet process typically utilizes a high-velocity stream of abrasive particles (e.g., abrasive "grit"), suspended in a stream of high pressure water. The pressure of the water may vary considerably, but is often in the range of about 35-620 MPa. A number of abrasive materials can be used, such as garnet, aluminum oxide, silicon carbide, and glass beads.

In addition, and as explained in US Patent Application Ser. No. 12/790,675, the water jet system can include a multi-axis computer numerically controlled (CNC) unit. The CNC systems themselves are known in the art, and described, for example, in U.S. Patent Publication 200510013926 (S. Rutkowski et al), which is incorporated herein by reference. CNC systems allow movement of the cutting tool along a number of X, Y, and Z axes, as well as rotational axes.

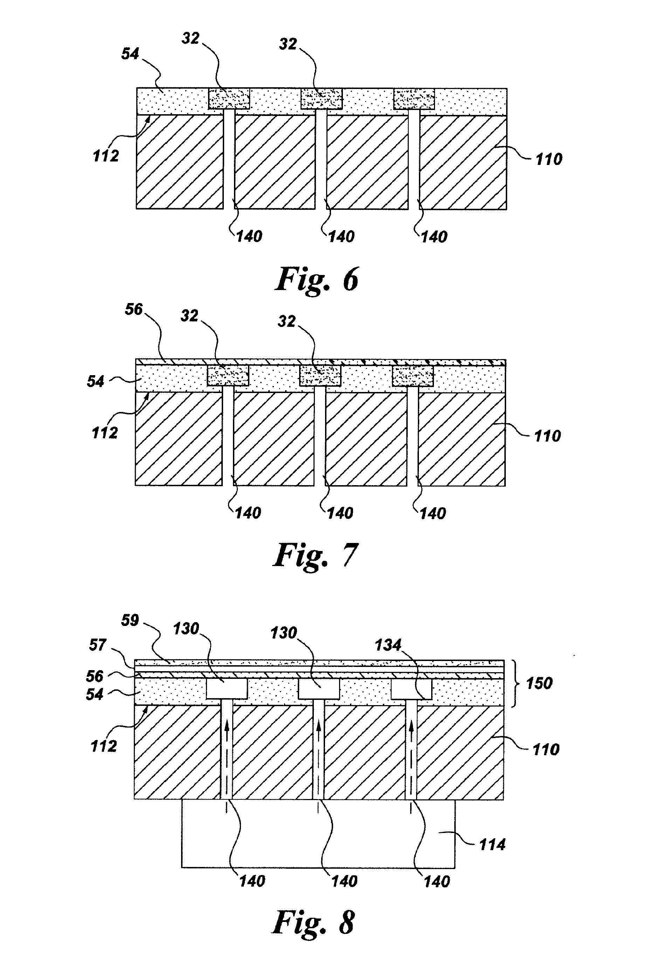

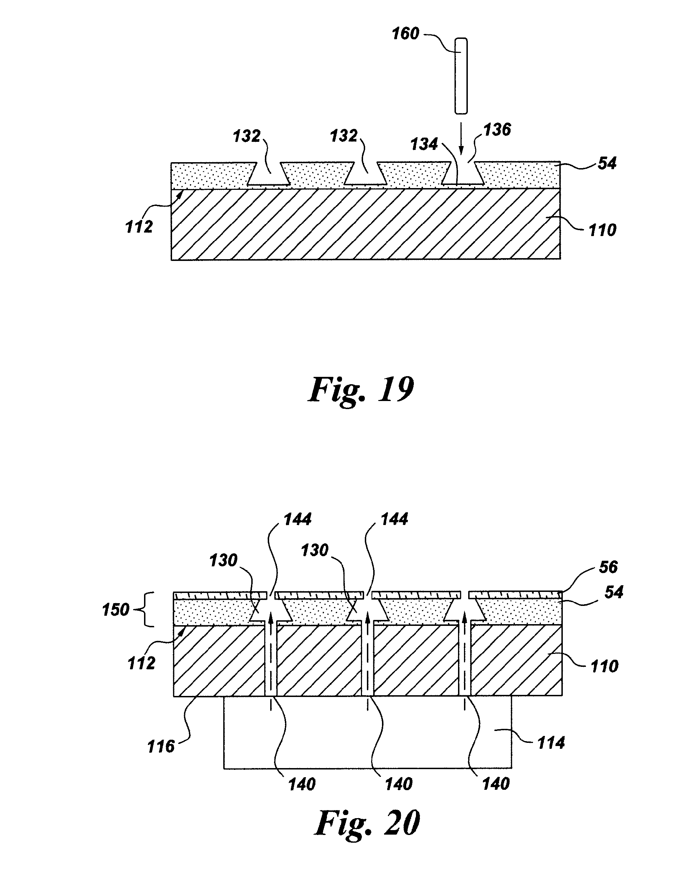

As indicated, for example, in FIGS. 7 and 8, the component fabrication method further includes depositing at least one additional coating 56, 57, 59 over the structural coating 54 and over the groove(s) 132, such that the groove(s) 132 and the additional coating(s) 56, 57, 59 together define one or more channels 130 for cooling the component 100. It should be noted that although the grooves 132 and channels 130 are shown as being rectangular in FIGS. 4-9, they may also take on other shapes. For example, the grooves 132 (and channels 130) may be re-entrant grooves 132 (re-entrant channels 130), as described below with reference to FIGS. 19 and 20. In addition, the side-walls of the grooves 132 (channels 130) need not be straight. For various applications, the side-walls of the grooves 132 (channels 130) may be curved or rounded.

As indicated, for example, in FIGS. 9 and 10, the component fabrication method further includes forming at least one exit hole 142 through the additional coating 56, 57, 59 for each of the respective channels 132, to receive and discharge coolant from the respective channel 130. The exit holes 142 may be formed, for example, using one or more of laser drilling, abrasive liquid jet, electric discharge machining (EDM) and electron beam drilling. It should be noted that EDM is typically limited in application, to forming holes through electrically conductive coatings. For the example configuration shown in FIG. 10, the cooling channel 130 conveys coolant from an access hole 140 to a film cooling hole 142. It should be noted that although the film holes are shown in FIG. 9 as being round, this is a non-limiting example. The film holes may also be non-circular shaped holes.

For the example process shown in FIG. 5, the component fabrication method further includes forming one or more access holes 140 through the base 134 of a respective one of the grooves 132 to provide fluid communication between the grooves 132 and the hollow interior space(s) 114. The access holes 140 are formed prior to depositing the additional coating(s) 56, 57, 59. The access holes 140 are typically circular or oval in cross-section and may be formed, for example using on or more of laser machining (laser drilling), abrasive liquid jet, electric discharge machining (EDM) and electron beam drilling. The access holes 140 may be normal to the base 134 of the respective grooves 132 (as shown in FIG. 5) or, more generally, may be drilled at angles in a range of 20-90 degrees relative to the base 134 of the groove.

For the example process configuration shown in FIGS. 5-8, the component fabrication method further includes filling the groove(s) 132 with a filler 32 (FIG. 6) through the respective one or more openings 58 (FIG. 5) in the structural coating 54. For example, the filler may be applied by slurry, dip coating or spray coating the component 100 with a metallic slurry "ink" 32, such that the grooves 132 are filled. For other configurations, the filler 32 may be applied using a micro-pen or syringe. For certain implementations, the grooves 132 may be over-filled with the filler material 32. Excess filler 32 may be removed, for example may be wiped off, for example using a doctor blade. The surface may then be cleaned chemically prior to the deposition of the coatings. Non-limiting example materials for the filler 32 include photo-curable resins (for example, visible or UV curable resins), ceramics, copper or molybdenum inks with an organic solvent carrier, and graphite powder with a water base and a carrier. More generally, the sacrificial filler 32 may comprise the particles of interest suspended in a carrier with an optional binder. Further, depending on the type of filler employed, the filler may or may not flow into the access holes 140. Example filler materials (or channel filling means or sacrificial materials) are discussed in commonly assigned, US Patent No. 5,640,767 and in commonly assigned, US Patent No. 6,321,449, which are incorporated by reference herein in their entirety. For particular process configurations, a low strength metallic slurry "ink" is used for the filler. The use of a low strength ink beneficially facilitates subsequent polishing and/or finishing.

As indicated in FIG. 7, the additional coating 56 is deposited over the structural coating 54 and over the filler 32 disposed in the groove(s) 132. As indicated in FIGS. 7 and 8, the filler 32 is removed from the groove(s) 132 after the additional coating 56, 59 has been deposited. For the example process shown in FIGS. 3-8, access holes 140 are formed prior to filling the grooves 132 with the filler 32. Although the process shown in FIGS. 3-8 uses a filler 32 to keep the additional coating 56, 59 from filling the cooling channels 130, for other processes the grooves 132 are unfilled when the additional coating 56, 57, 59 is deposited. Examples of such processes include forming relatively narrow channels (for example, having widths in a range of about 0.2- 0.4 mm (8 to 15 mils) at the top opening where the coating bridges) and forming re-entrant shaped channels, as discussed below with reference to FIGS. 19 and 20.

For particular processes, the additional coating 56 shown in FIG. 7 comprises a second structural coating 56, such that the groove(s) 132 and the second structural coating 56 together defme the cooling channels 130. The structural coating comprises any suitable material and is bonded to the outer surface 112 of substrate 110. For particular configurations, the first and/or second structural coating layers 54, 56 may have a thickness in the range of 0.02-2.0 millimeters, and more particularly, in the range of 0.1 to 1 millimeters, and still more particularly 0.1 to 0.5 millimeters for industrial gas turbine components. For aviation components, this range is typically 0.05 to 0.25 millimeters. However, other thicknesses may be utilized depending on the requirements for a particular component 100. For particular configurations, the structural coatings 54, 56 comprise the same coating material. Using the same material for structural coatings 54, 56 has the advantage of providing strain relief in the coating, as well as the ability to shape the strain relief in the second coating.

For other configurations, the two structural coatings 54, 56 may comprise different coating materials. For particular processes, the same deposition technique is used to deposit the structural coatings 54, 56. For other configurations, different deposition techniques are used to deposit the two structural coatings 54, 56. Example structural coating materials and deposition techniques are provided below.

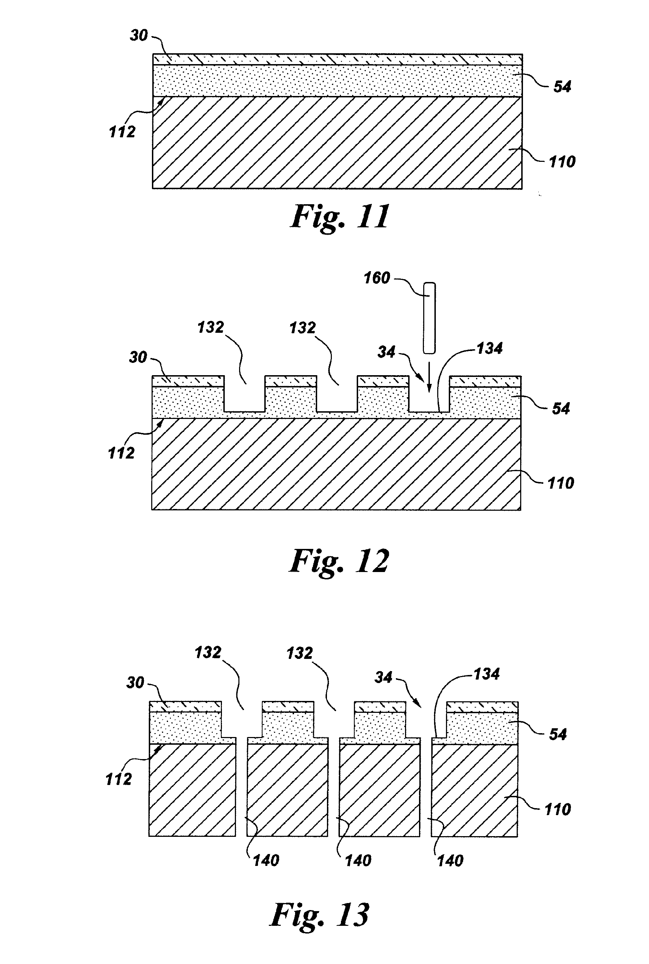

For the example arrangement shown in FIG. 8, the component fabrication method further includes depositing an environmental coating 57, such as a bond coat or oxidation resistant coating over the second structural coating 56. Example environmental coatings include without limitation platinum aluminide, a MCrAlY overlay, or an overlay NiAl based coating. In addition, for the arrangement shown in FIG. 8, a thermal barrier coating 59 is deposited over the environmental coating 57. Various heat treatments may be employed depending on the coatings deposited. Similarly, although not expressly shown for the processes illustrated in FIGS. 11-18 and 19-20, these methods may also include depositing additional coating layers 57, 59 over the second structural coating layer 56. However, for other applications, a structural coating may be all that is used for the three concepts shown in FIGS. 3-8, 11-18 and/or FIGS. 19-20.

The structural coating layers 54, 56 and optional additional coating layer(s) 57, 59 may be deposited using a variety of techniques. For particular processes, structural coating layers 54, 56 are deposited by performing an ion plasma deposition (cathodic arc). Example ion plasma deposition apparatus and method are provided in commonly assigned, US Published Patent Application No. 20080138529, Weaver et al, "Method and apparatus for cathodic arc ion plasma deposition," which is incorporated by reference herein in its entirety. Briefly, ion plasma deposition comprises placing a cathode formed of a coating material into a vacuum environment within a vacuum chamber, providing a substrate 110 within the vacuum environment, supplying a current to the cathode to form a cathodic arc upon a cathode surface resulting in arc-induced erosion of coating material from the cathode surface, and depositing the coating material from the cathode upon the substrate surface 112.

Non-limiting examples of a coating deposited using ion plasma deposition include structural coatings 54, 56, as well as bond coatings and oxidation-resistant coatings, as discussed in greater detail below with reference to US Patent No. 5,626,462. For certain hot gas path components 100, the structural coating 54, 56 comprises a nickel-based or cobalt-based alloy, and more particularly comprises a superalloy or a (NiCo)CrAlY alloy. For example, where the substrate material is a Ni-base superalloy containing both γ and γ' phases, structural coating 54, 56 may comprise similar compositions of materials, as discussed in greater detail below with reference to US Patent No. 5,626,462.

For other process configurations, structural coating layers 54, 56 are deposited by performing at least one of a thermal spray process and a cold spray process. For example, the thermal spray process may comprise combustion spraying or plasma spraying, the combustion spraying may comprise high velocity oxygen fuel spraying (HVOF) or high velocity air fuel spraying (HVAF), and the plasma spraying may comprise atmospheric (such as air or inert gas) plasma spray, or low pressure plasma spray (LPPS, which is also know as vacuum plasma spray or VPS). In one non-limiting example, a NiCrAlY coating is deposited by HVOF or HVAF. Other example techniques for depositing structural coating layers 54, 56 include, without limitation, sputtering, electron beam physical vapor deposition, electroless plating, and electroplating.

For certain configurations, it is desirable to employ multiple deposition techniques for depositing structural 54, 56 and optional additional 59 coating layers. For example, a first structural coating layer may be deposited using an ion plasma deposition, and a subsequently deposited layer and optional additional layers (not shown) may be deposited using other techniques, such as a combustion spray process or a plasma spray process. Depending on the materials used, the use of different deposition techniques for the coating layers may provide benefits in properties, such as, but not restricted to strain tolerance, strength, adhesion, and/or ductility.

More generally, and as discussed in US Patent No. 5,626,462, the material used to form coating 150 comprises any suitable material. For the case of a cooled turbine component 100, the structural coating material must be capable of withstanding temperatures up to about 1150° C, while the TBC can withstand temperatures up to about 1425° C. The structural coating 54, 56 must be compatible with and adapted to be bonded to the airfoil-shaped outer surface 112 of substrate 110, as discussed in commonly assigned, US. Patent Application. Ser. No. 12/943,563, Bunker et al. "Method of fabricating a component using a fugitive coating," which patent application is hereby incorporated herein in its entirety.

As discussed in US Patent No. 5,626,462, where the substrate material is a Ni-base superalloy containing both γ and γ' phases, the materials for the structural coating 54, 56 may comprise similar compositions of materials to the substrate. Such a combination of coating 54, 56 and substrate 110 materials is preferred for particular applications, such as where the maximum temperatures of the operating environment (that is, the gas temperatures) are similar to those of existing engines (e.g. below 1650° C.) In the case where the substrate material is a Nb-base alloy, NiAl-based intermetallic alloy, or TiAl-based intermetallic alloy, the structural coating 54, 56 may likewise comprise similar material compositions.

As discussed in US Patent No. 5,626,462, for other applications, such as applications that impose temperature, environmental or other constraints that make the use of a monolithic metallic or intermetallic alloy coating 54, 56 inadequate, it is preferred that the structural coating 54, 56 comprise composites. The composites can consist of a mixture of intermetallic and metal alloy phases or a mixture of intermetallic phases. The metal alloy may be the same alloy as used for the substrate 110 or a different material, depending on the requirements of the component 100. Further, the two constituent phases must be chemically compatible, as discussed in US. Patent Application. Ser. No. 12/943,563, Bunker et al. It is also noted that within a given coating, multiple composites may also be used, and such composites are not limited to two-material or two-phase combinations. Additional details regarding example structural coating materials are provided in US Patent No. 5,626,462.

For the example configuration shown in FIGS. 19 and 20, each of the grooves 132 has a base 134 and a top 136, where the base 134 is wider than the top 136, such that each of the grooves 132 comprises a re-entrant shaped groove 132. For particular configurations, the base 134 of a respective one of the re-entrant shaped grooves 132 is at least two times wider than the top 136 of the respective groove 132. For more particular configurations, the base 134 of the respective re-entrant shaped groove 132 is at least three times, and more particularly, is in a range of about 3-4 times wider than the top 136 of the respective groove 132. Techniques for forming re-entrant grooves 132 are provided in commonly assigned, US Patent Application, Ser. No. 12/943,624, Ronald S. Bunker et al.*,* "Components with re-entrant shaped cooling channels and methods of manufacture," which patent application is incorporated by reference herein in its entirety. Beneficially, the additional coating 56, 59 can be deposited over unfilled re-entrant grooves 132 (that is, without the filling or partial filling the groove with a sacrificial filler), as indicated for example in FIGS. 19 and 20. In addition, the re-entrant grooves provide enhanced cooling relative to a simple shaped groove (namely, grooves with tops 136 and bases of approximately equal width).

Similarly, for smaller components, the grooves may be small enough, such that the additional coating 56, 59 can be deposited over unfilled grooves 132 (with arbitrary shapes, that is they need not be re-entrant shaped) without filling or partial filling of the groove. This could be the case for smaller, for example aviation-sized, components.

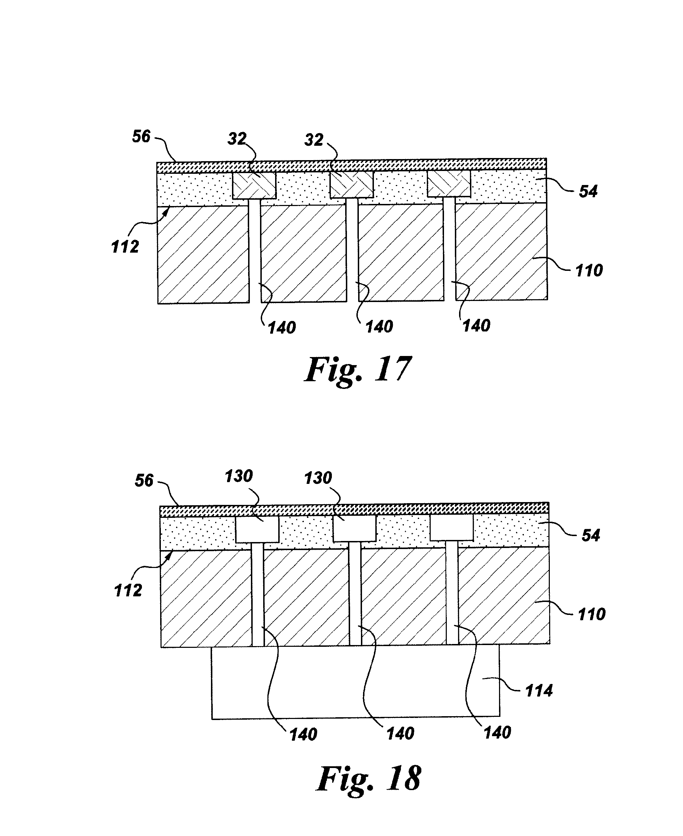

More particularly, for the arrangement shown in FIG. 20, the additional coating 56, 59 comprises a structural coating 56 and defines one or more permeable slots 144 (porous gaps 144), such that the structural coating 56 does not completely bridge each of the one or more grooves 132. However, for the example configurations depicted in FIGS. 8 and 18, the additional coating 56 completely bridges the respective grooves 132, thereby sealing the respective channels 130. Although the permeable slots 144 are shown for the case of re-entrant channels 130, permeable slots 144 may also be formed for other channel geometries. Typically the permeable slots (gaps) 144 have irregular geometries, with the width of the gap 144 varying, as the structural coating is applied and builds up a thickness. As the first layer of the structural coating is applied to the substrate 110, the width of the gap 144 may narrow from approximately the width of the top 136 of the channel 130, as the structural coating is built up. For particular examples, the width of gap 144, at its narrowest point, is 5% to 20% of the width of the respective channel top 136. In addition, the permeable slot 144 may be porous, in which case the "porous" gap 144 may have some connections, that is, some spots or localities that have zero gap. Beneficially, the gaps 144 provide stress relief for the coating 150.

Depending on their specific function, the permeable slots 144, may extend either (1) through all of the coating layers or (2) through some but not all coatings, for example, a permeable slot 144 may be formed in one or more coating layers with a subsequently deposited layer bridging the slots, thereby effectively sealing the slots 144. Beneficially, the permeable slot 144 functions as a stress/strain relief for the structural coating(s). In addition, the permeable slot 144 can serve as a cooling means when it extends through all coatings, that is for this configuration, the permeable slots 144 are configured to convey a coolant fluid from the respective channels 130 to an exterior surface of the component. Further, the permeable slot 144 can serve as a passive cooling means when bridged by the upper coatings, in the case when those coatings are damaged or spalled.

For particular process concepts, the component fabrication method further includes performing a heat treatment after depositing the structural coating 54. Additional heat treatments may be performed after depositing a second structural coating layer 56 and/or after deposition of additional coating layers 59. For example, in the case of a metallic coating, the coated component 100 may be heated to a temperature in a range of about 0.7-0.9 Tm after the deposition of the second structural coating layer 56, where Tm is the melting temperature of the coating in degrees Kelvin. Beneficially, this heat treatment promotes the interdiffusion and subsequent adhesion of the two layers 54, 56 of the structural coating to one another, thereby reducing the likelihood of interfacial flaws at the channel edges.

For the example process configuration shown in FIGS. 11-18, the component fabrication method further includes depositing a fugitive coating 30 on the structural coating 54 prior to machining the structural coating 54, as indicated for example in FIGS. 11 and 12. For this process, the structural coating 54 is machined through the fugitive coating 30, as indicated in FIG. 12. The machining forms one or more openings 34 in the fugitive coating 30, as shown in FIG. 13. Additionally, the component fabrication method may optionally further include drying, curing or sintering the fugitive coating 30 prior to machining the structural coating 54. For particular process configurations, the thickness of the fugitive coating 30 deposited on the structural coating 54 is in a range of about 0.5-2.0 millimeters. In one non-limiting example, the fugitive coating 30 comprises a one millimeter thick polymer based coating. The fugitive coating 30 may be deposited using a variety of deposition techniques, including powder coating, electrostatic coating, dip-coating, spin coating, chemical vapor deposition and application of a prepared tape. More particularly, the fugitive coating is essentially uniform and is able to adhere, but does not harm the structural coating 54 during processing or subsequent removal.

For particular process configurations, the fugitive coating 30 is deposited using powder coating or electrostatic coating. For example process configurations, the fugitive coating 30 comprises a polymer. For example, the fugitive coating 30 may comprise a polymer based coating, such as pyridine, which may be deposited using chemical vapor deposition. Other example polymer based coating materials include resins, such as polyester or epoxies. Example resins include photo-curable resins, such as a light curable or UV curable resin, non-limiting examples of which include a UV/Visible light curable masking resin, marketed under the trademark Speedmask 729® by DYMAX, having a place of business in Torrington, Connecticut, in which case, the method further includes curing the photo-curable resin 30, prior to forming the grooves 132. For other process configurations, the fugitive coating 30 may comprise a carbonaceous material. For example, the fugitive coating 30 may comprise graphite paint. Polyethylene is yet another example coating material. For other process configurations, the fugitive coating 30 may be enameled onto the structural coating 54.

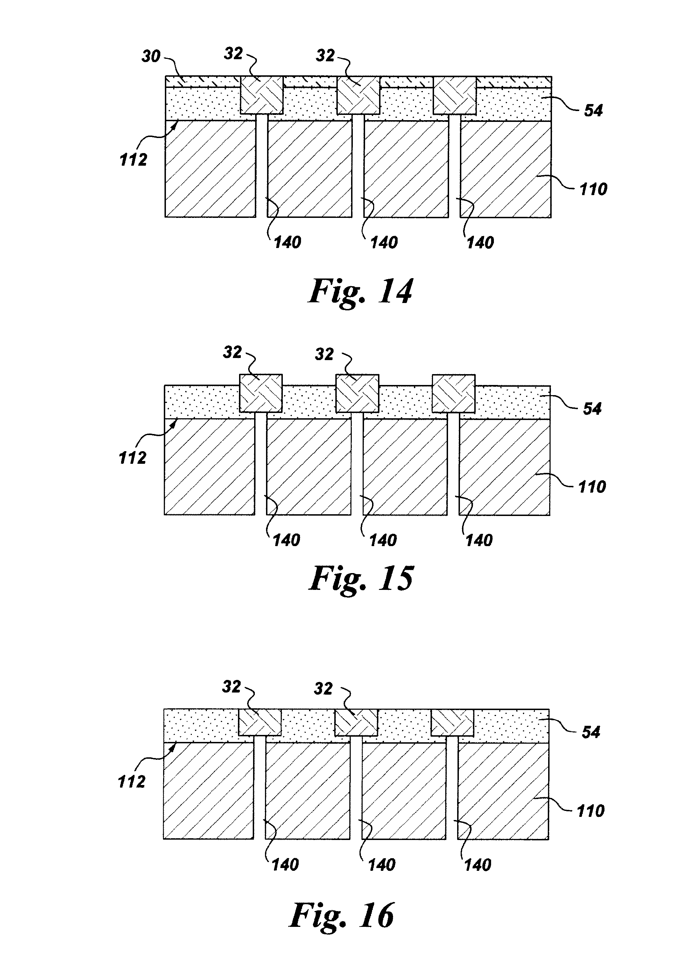

As indicated in FIGS. 14-17, the fugitive coating 30 is removed prior to depositing the additional coating 56, 59. Depending on the specific materials and processes, the fugitive coating 30 may be removed using mechanical (for example, polishing), thermal (for example combustion), plasma-based (for example plasma etching) or chemical (for example, dissolution in a solvent) means or using a combination thereof. More particularly, the method further includes drying, curing or sintering the fugitive coating 30 prior to machining the structural coating 54. As discussed in US. Patent Application. Ser. No. 12/943,563, Bunker et al.*,* the fugitive coating 30 acts as a machining mask for formation of the channels, and facilitates the formation of cooling channels 130 with the requisite sharp, well defmed edges at the coating interface.

Referring now to FIG. 14, the component fabrication method illustrated in FIGS. 11-18 further includes filling the groove(s) 132 with a filler 32 through the opening(s) 58 in the structural coating 54. Although not expressly shown, for certain process configurations, the fugitive coating 30 may be removed prior to filling the grooves with the filler 32. For the process shown in FIG. 14, the filler 32 is deposited in the grooves 132 through the respective opening(s) 58 in the first structural coating layer 54 and through the respective opening(s) 34 in the fugitive coating 30, prior to the removal of the fugitive coating 30. For the example process shown in FIGS. 14-17, the component fabrication method further includes removing the fugitive coating 30 prior to depositing the additional coating 56. As indicated in FIG. 17, the additional coating 56 is deposited over the structural coating 54 and over the filler 32 disposed in the groove(s) 132. The component fabrication method may optionally include drying, curing or sintering the filler 32 prior to the deposition of the additional coating 56. As indicated in FIGS. 17 and 18, the component fabrication method further includes removing the filler 32 from the groove(s) 132 after the additional coating 56 has been deposited.

As noted above, reduction of wall thickness and the corresponding strength reduction for the cast airfoils can raise concerns for micro-channels formed in the load bearing substrate. Beneficially, by forming the grooves 132 in the structural coating 54, the substrate 110 can remain intact, thereby preserving the strength of the cast airfoils.

A component 100 embodiment of the invention is described with reference to FIGS. 2, 4-10 and 12-20. As indicated, for example, in FIG. 2, the component 100 includes a substrate 110 comprising an outer surface 112 and an inner surface 116. As indicated, for example, in FIG. 2, the inner surface 116 defines at least one hollow, interior space 114. The component 100 further includes a structural coating 54 disposed over at least a portion of the outer surface 112 of the substrate 110. As indicated, for example, in FIGS. 2, 4, 5, 9, 10, 12, 13, and 19, the structural coating 54 defines one or more grooves 132. As indicated, for example, in FIGS. 4, 5, 9, 10, 12, 13, and 19, each of the grooves 132 extends at least partially along the substrate 110 and has a base 134. Although the grooves are shown as having straight walls, the grooves 132 can have any configuration, for example, they may be straight, curved, or have multiple curves. Further, the grooves may be formed entirely within the structural coating 54, as shown in FIG. 2, or may extend into the substrate 110.

One or more access holes 140 extend through the base 134 of a respective groove 132 to place the groove 132 in fluid communication with the interior space(s) 114, as shown for example in FIGS. 8, 18 and 20. As discussed above, the access holes 140 may be normal to the base 134 of the respective grooves 132 (as shown in FIG. 8, 18 and 20) or may be drilled at angles in a range of 20-90 degrees relative to the base 134 of the groove 132.

As indicated in FIG. 8, 18 and 20, for example, the component 100 further includes at least one additional coating 56, 59 disposed over the structural coating 54 and over the groove(s) 132, such that the groove(s) 132 and the additional coating 56, 59 together define one or more channels 130 for cooling the component 100. For particular configurations, each cooling channel 130 has a width in the range of about 0.2-1.0 mm. More particularly, a cooling channel 130 should be in the range of about 0.2-1.0 mm (8 to 40 mils) wide if the channels are to be coated using a sacrificial filler with subsequent removal thereof If the coating is applied to the cooling channels without the use of a sacrificial filler, the cooling channels 130 should be in the range of about 0.2-0.4 mm (8 to 15 mils) wide at the top opening where the coating bridges.

As indicated, for example, in FIGS. 9 and 10, at least one exit hole 142 extends through the additional coating 56, 59 for each of the respective channels 130, to receive and discharge a coolant fluid from the respective channel 130. For the example configuration shown in FIG. 10, the cooling channel 130 conveys coolant from an access hole 140 to a film cooling hole 142. It should be noted that although the film holes are shown in FIG. 9 as being round, this is a non-limiting example. The film holes may also be non-circular shaped holes.

For particular configurations, the additional coating 56, 57, 59 comprises a second structural coating 56. As noted above, for particular configurations, the structural coatings 54, 56 comprise the same coating material. More generally, for these configurations, the structural coatings 54, 56 may have similar or essentially identical properties. For example, the two layers may be formed of the same material deposited using the same technique under similar or identical conditions.

For other configurations, the structural coatings 54, 56 may comprise different coating materials. More generally, the structural coatings 54, 56 may differ in at least one property selected from the group consisting of density, roughness, porosity and coefficient of thermal expansion. For example, the structural coating 54 may be denser and smoother than the structural coating 56 (that is, the structural coating 56 may be rougher or more porous than the structural coating 54). This can be achieved, for example, by depositing the two structural coatings 54, 56 using different deposition techniques. In one non-limiting example, the first structural coating 54 has an average roughness R_{A} as determined by cone stylus profilometry of about 1.5 to 2.5 microns, while the second structural coating 56 has an average roughness R_{A} as determined by cone stylus profilometry of about 5 to 10 microns.

For particular arrangements, the structural coating 54 has a thickness of less than about 1.0 mm, and more particularly, less than about 0.5 mm, and still more particularly has a thickness in a range of about 0.25-0.5 mm, and the second structural coating 56 has a thickness in a range of about 0.1-0.5 mm. As noted above, if structural coating 54 is formed using an ion plasma deposition, the thickness may be less than about 0.5 mm, whereas for structural coatings 54 deposited by HVOF, the thickness may be less than about 1.0 mm. More particularly, the thickness of the first structural coating 54 is in a range of about 0.2-0.5 mm, and the thickness of the second structural coating 56 is in a range of about 0.125-0.25 mm. In addition, and as indicated for example in FIG. 8, the component 100 may further include a thermal barrier coating 59 disposed over a second structural coating 56.

Further, and as indicated in FIG. 8, the additional coatings 56, 57, 59 may include an environmental coating 57. Example environmental coatings include without limitation platinum aluminide, a MCrAlY overlay, or an overlay NiAl based coating. In addition, for the arrangement shown in FIG. 8, a thermal barrier coating 59 is deposited over the environmental coating 57. Similarly, although not expressly shown for the configuration shown in FIGS. 19-20, this re-entrant channel configuration may also include additional coating layers 57, 59 disposed over the second structural coating layer 56. However, for other arrangements, a structural coating 56 may be all that is used.

As discussed above with reference to FIGS. 19 and 20, for certain configurations, the second structural coating 56 defines one or more permeable slots 144, such that the second structural coating 56 does not completely bridge each of the one or more grooves 132. As noted above, although the permeable slots 144 are shown in FIGS. 19 and 20 for the case of re-entrant channels 130, permeable slots 144 may also be formed for other channel geometries. In addition, the permeable slot 144 can serve as a cooling means when it extends through all additional coatings, that is for these configurations, the permeable slots 144 are configured to convey a coolant fluid from the respective channels 130 to an exterior surface of the component. However, for other configurations, the permeable slot(s) 144 may serve as a passive cooling means when bridged by a bond coat 57 and optionally a TBC 59, for example, in the case when those coatings are damaged or spalled. The formation of permeable slots 144 is described in commonly assigned, US Patent Application Ser. No. 12/943,646, Ronald Scott Bunker et al.*,* "Component and methods of fabricating and coating a component," which patent application is hereby incorporated by reference herein in its entirety.

However, for the example configurations depicted in FIGS. 8 and 18, the additional coating 56 completely bridges the respective grooves 132, thereby sealing the respective channels 130. This particular configuration can be achieved, for example, by rotating the substrate 110 about one or more axes during deposition of the second coating layer 56 or by otherwise depositing the second coating layer 56 at an incidence angle inclined more than about +/- 20 degrees from the surface normal of the substrate 110, in order to substantially coat over the opening 58 formed in the first coating layer 54. Other techniques for producing a continuous additional coating 56 would be to apply an alternate (relative to layer 54) type of second coating, such as an air plasma spray coating, or to apply a thicker additional coating 56, as described in US Patent Application Ser. No. 12/943,646, Bunker et al.

For the particular configurations shown in FIGS. 19 and 20, the base 134 is wider than the top 136 for each of the grooves 132, such that each of the grooves 132 comprises a re-entrant shaped groove 132 and hence, each of the cooling channels 130 comprises a re-entrant shaped channel 130. Various properties and benefits of re-entrant shaped channel 130, as well as techniques for forming re-entrant shaped channel 130 are described in US Patent Application, Ser. No. 12/943,624, Bunker et al. Although not expressly shown, the configuration shown in FIG. 20 may further include a thermal barrier coating 59 disposed over a second structural coating 56.

Beneficially, formation of cooling channels in the structural coating enhances thermal protection of the load bearing substrate, relative to conventional cooling channels formed under the structural coating. In addition, forming the cooling channels entirely within the structural coating eliminates structural and/or strength concerns associated with machining channels into the substrate.

Although only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method of fabricating a component (100), the method comprising:
depositing a structural coating (54) on an outer surface (112) of a substrate (110), wherein the substrate (110) has at least one hollow interior space (114);
forming one or more grooves (132) in the structural coating (54), wherein each of the one or more grooves (132) has a base (134) and extends at least partially along the substrate (110);
depositing at least one additional coating (56, 57, 59) over the structural coating (54) and over the one or more grooves (132), such that the one or more grooves (132) and the additional coating (56, 57, 59) together define one or more channels (130) for cooling the component (100);
forming one or more access holes (140) through the base (134) of a respective one of the grooves (132) to connect the respective groove (132) in fluid communication with respective ones of the at least one hollow interior space (114); and
forming at least one exit hole (142) through the additional coating (56, 57, 59) for each of the respective one or more channels (132), to receive and discharge coolant from the respective channel (130).

2. The method of Claim 1, wherein depositing the at least one additional coating (56, 57, 59) comprises depositing a second structural coating (56) over the structural coating (54) and over the one or more grooves (132), such that the one or more grooves (132) and the second structural coating (56) together defme the cooling channels (130).

3. The method of Claim 2, wherein depositing the at least one additional coating (56,57,59) further comprises depositing an environmental coating (57) over the second structural coating (56) and
depositing a thermal barrier coating (59) over the environmental coating (57).

4. The method of any of Claims 1 to 3, further comprising:
filling the one or more grooves (132) with a filler through the respective one or more openings in the structural coating (54), wherein the additional coating (56,57,59) is deposited over the structural coating (54) and over the filler disposed in the one or more grooves; and
removing the filler from the one or more grooves (132) after the additional coating has been deposited.

5. The method of any of Claims 1 to 4, wherein each of the one or more grooves (132) has a top (136), and wherein the base (134) of the groove (132) is wider than the top (136), such that each of the one or more grooves (132) comprises a re-entrant shaped groove.

6. The method of any preceding Claim, wherein the at least one additional coating (56,57,59) comprises a second structural coating (57) that defines one or more permeable slots (144), such that the second structural coating (57) does not completely bridge each of the one or more grooves (132).

7. The method of any preceding Claim, wherein the one or more grooves (132) are formed using one or more of an abrasive liquid jet, plunge electrochemical machining (ECM), electric discharge machining with a spinning electrode (milling EDM), and laser machining.

8. The method of any preceding Claim, further comprising performing a heat treatment after depositing the structural coating.

9. The method of Claim 1, wherein depositing the at least one additional coating (56, 57, 59) comprises depositing a second structural coating (56), wherein the structural coating (54) is deposited by performing one of an ion plasma deposition, a thermal spray process and a cold spray process, wherein the second structural coating (56) is deposited by performing one of an ion plasma deposition, a thermal spray process and a cold spray process, and wherein the structural coatings (54, 56) may be deposited using the same or different deposition processes.

10. A component (100) comprising:
a substrate (110) comprising an outer surface (112) and an inner surface (116), wherein the inner surface (116) defines at least one hollow, interior space (114);
a structural coating (54) disposed over at least a portion of the outer surface (112) of the substrate (110), wherein the structural coating (54) defines one or more grooves (132), wherein each of the one or more grooves (132) extends at least partially along the substrate (110) and has a base (134), and wherein one or more access holes (140) extend through the base (134) of a respective one of the one or more grooves (132) to place the groove (132) in fluid communication with respective ones of the at least one hollow interior space (114); and
at least one additional coating (56, 57, 59) disposed over the structural coating (54) and over the one or more grooves (132), such that the one or more grooves (132) and the additional coating (56, 57, 59) together defme one or more channels (130) for cooling the component (100), wherein at least one exit hole (142) extends through the additional coating (56, 57, 59) for each of the respective one or more channels (130), to receive and discharge a coolant fluid from the respective channel (130).

11. The component (100) of Claim 10, wherein the additional coating (56, 57, 59) comprises a second structural coating (56), and wherein the second structural coating (56) defines one or more permeable slots (144), such that the second structural coating (56) does not completely bridge each of the one or more grooves (132).

12. The component (100) of Claim 11, wherein the additional coating (56, 57, 59) further comprises an environmental coating (57) disposed over the second structural coating (56) and a thermal barrier coating (59) disposed over the environmental coating (57), wherein the permeable slots (144) extend through the environmental coating (57) and the thermal barrier coating (59), such that the permeable slots convey the coolant fluid from the respective one or more channels (130) to an exterior surface of the component.

13. The component (100) of Claim 10 to 12, wherein the additional coating (56, 57, 59) comprises a second structural coating (56), and wherein the additional coating (56, 57, 59) further comprises an environmental coating (57) disposed over the second structural coating (56) and a thermal barrier coating (59) disposed over the environmental coating (57).

14. The component (100) of Claims 10 to 13, wherein the additional coating (56, 57, 59) comprises a second structural coating (56), wherein the structural coating (54) has a thickness of less than about 1.0 mm, and wherein the additional coating (56, 57, 59) comprises a second structural coating (56) with a thickness in a range of about 0.1-0.5 mm.

15. The component (100) of any of Claims 10 to 15, wherein each of the one or more grooves (132) has a top (136), wherein the base (134) is wider than the top (136), such that each of the one or more grooves (132) comprises a re-entrant shaped groove (132).
